# EUROPÄISCHE PATENTSCHRIFT

(11) **EP 1 374 444 B1**
(45) Veröffentlichungstag und Bekanntmachung des Hinweises auf die Patenterteilung: **03.10.2018**
(21) Anmeldenummer: 02727265.7
(22) Anmeldetag: 23.03.2002
(51) Int. Cl.: H04B 7/08

(54) **VERFAHREN UND VORRICHTUNG ZUR UNTERDRÜCKUNG VON MULTIPATH-STÖRUNGEN BEI EINEM EMPFÄNGER FÜR ELEKTROMAGNETISCHE WELLEN**
METHOD AND DEVICE FOR SUPPRESSING MULTIPATH INTERFERENCE IN A RECEIVER OF ELECTROMAGNETIC WAVES
PROCÉDÉ ET DISPOSITIF PERMETTANT D'ÉLIMINER DES PERTURBATIONS DUES AUX TRAJETS MULTIPLES DANS UN RÉCEPTEUR D'ONDES ÉLECTROMAGNÉTIQUES

(30) Priorität: 27.03.2001 DE 10115053
(43) Veröffentlichungstag der Anmeldung: 02.01.2004
(73) Patentinhaber: ROBERT BOSCH GMBH, 70442 Stuttgart (DE)
(72) Erfinder: VOGT, Lothar, 31199 Barienrode (DE); NYENHUIS, Detlev, 31079 Sibbesse (DE)
(86) Internationale Anmeldenummer: PCT/DE2002/001084
(87) Internationale Veröffentlichungsnummer: WO 2002/078214

(56) Entgegenhaltungen:
- EP-A- 0 961 419
- EP-A- 0 967 746
- US-A- 5 345 602
- US-B1- 6 172 970

## Beschreibung

### Stand der Technik

Die Erfindung betrifft ein Verfahren zur Unterdrückung von Multipath-Störungen bei einem Empfänger für elektromagnetische Wellen, insbesondere einem FM oder UKW Empfänger, wobei aus mindestens zwei Antennensignalen ein neues Signal generiert wird. Desweiteren betrifft die Erfindung eine Vorrichtung zur Unterdrückung von Multipath-Störungen bei einem Empfänger für elektromagnetische Wellen, insbesondere einem FM oder UKW Empfänger, mit Signalgenerierungsmitteln zum Generieren eines neuen Signals aus mindestens zwei Antennensignalen und mit einem Decoder zum Erzeugen eines Wiedergabesignals.

Bei einem aus der Praxis bekannten Verfahren zur Unterdrückung von Multipath-Störungen bei einem FM oder UKW Empfänger, dem sogenannten ADA (Auto Directional Antenna) Verfahren, wird das neue Signal durch eine geeignete Linearkombination von mindestens zwei Antennensignalen generiert. Unter der Bezeichnung Diversity Verfahren ist ein Verfahren zur Unterdrückung von Multipath-Störungen bei einem FM oder UKW Empfänger bekannt, bei dem zwischen verschiedenen Antennen geschaltet wird. Das Umschalten erfolgt hier in Abhängigkeit von der jeweiligen Empfangsfeldstärke und Signalqualität. Im weitesten Sinne könnte man das Diversity Verfahren als Spezialfall des ADA Verfahrens betrachten, bei dem lediglich einer der Koeffizienten der Linearkombination ungleich Null ist. Desweiteren ist es aus der Praxis bekannt, die Antennensignale eines FM oder UKW Empfängers für RDS (Radio Data System) Aktivitäten zu nutzen.

In der US-Patentschrift 5,345,602 wird ein UKW Radioempfänger beschrieben, der mehrere Antennensignale jeweils mit einem lokal generierten Oszillatorsignal mischt und danach aufaddiert. Auf der Basis des daraus resultierenden Signals wird dann das Wiedergabesignal erzeugt. Parallel dazu wird in periodischen Zeitintervallen kurzzeitig und für das menschliche Ohr nicht wahrnehmbar auf alternative Sendefrequenzen des eingestellten Senders umgeschaltet, um die Empfangsqualität dieser alternativen Sendefrequenzen zu ermitteln und abzuspeichem. Bei ungenügender Empfangsqualität der ursprünglich eingestellten Sendefrequenz kann dann schnell und für einen Hörer unmerklich auf die beste der alternativen Sendefrequenzen umgeschaltet werden.

Neben diesen in der US-Patentschrift 5,345,602 beschriebenen sogenannten AF (alternate frequency) Tests und den sogenannten PI (program identification) Tests umfassen die RDS Aktivitäten häufig auch die Beobachtung von TMC (traffic message channel) Kanälen.

Bei dem aus der US-Patentschrift 5,345,602 bekannten UKW Radioempfänger bzw. bei dem in diesem Zusammenhang beschriebenen Verfahren wird der Erzeugung des Wiedergabesignals immer ein aus mehreren Antennensignalen generiertes neues Signal zugrunde gelegt, auch wenn aktuell keine Multipath-Störungen oder Fading-Effekte auftreten. Deswelteren sei im Bezug auf den bekannten UKW Radioempfänger angemerkt, dass für die RDS Aktivitäten nur sehr wenig Zeit zur Verfügung steht, wenn sie von einem Hörer nicht wahrgenommen werden sollen, da der RDS Verarbeitung dasselbe Signal zugrunde liegt, wie der Erzeugung des Wiedergabesignals. So darf beispielsweise die Dauer der durchgeführten AF Tests wenige Millisekunden nicht übersteigen.

Die US-B-6 172 970 offenbart einen Empfänger für Funksignale mit zwei Empfangsantennen und diesen nachgeschalteten Stufen zur Beeinflussung der Signalamplituden sowie einem einer der Empfangsantennen nachgeschalteten Phasenschieber und ferner einer Steuerung, die dazu ausgebildet ist, den Phasenschieber und die Verstärkerstufen zur Optimierung des durch Kombination der beiden entsprechend beeinflussten Empfangssignale anzusteuern. Die Empfangsqualität der einzelnen Antennensignale wird derart geprüft, dass das Signal der jeweils anderen Empfangsantenne unterdrückt wird. Als Kriterium für den Diversity- bzw. den Einzelantennen-Betrieb ist angegeben, dass Einzelantennenbetrieb dann eingestellt wird, wenn die Signalqualität eines einzelnen der beiden Antennensignale über einer vorgegebenen Schwelle liegt, während Diversitiy-Betrieb eingestellt wird, wenn die Signalqualität der Einzelsignale unter der genannten Schwelle, jedoch über einer zweiten geringeren Schwelle (Grenze der Demodulierbarkeit) liegt. Die EP-A-0 967 746 offenbart einen Rundfunkempfänger mit zwei Empfangsantennen, der zwischen einem sogenannten Diversity-Betriebszustand, bei dem eine Linearkombination der Antennensignale der beiden Empfangsantennen einer Weiterverarbeitung zugrunde gelegt wird, und einem "non-diversity mode", in dem nur ein erstes der beiden Antennensignale der Weiterverarbeitung zugrunde gelegt wird, umschaltbar ist. Die Gewichtung, mit der die beiden Antennensignale im Diversity-Betriebszustand der Weiterverarbeitung zugrunde gelegt werden, wird in Abhängigkeit einer Qualitätsbewertung des ersten und des zweiten Antennensignals eingestellt. Im "non-diversitiy mode" wird hingegen das Antennensignal nur einer der beiden Empfangsantennen der Erzeugung des Wiedergabesignals zugrunde gelegt, während der zweite mit der zweiten Empfangsantenne verbundene Tuner zur Prüfung alternativer Rundfunkfrequenzen (AF) auf diese anderen Rundfunkfrequenzen abgestimmt werden kann - oftmals auch als Hintergrund-Betrieb bezeichnet. Es findet sich weiter der Hinweis, dass die Umschaltung zwischen "diversity mode" und "non-diversitiy mode" in Abhängigkeit der Signalqualität des ersten und/oder zweiten Antennensignals vorgenommen wird, wobei die Signalqualität auch mit einem Schwellwert verglichen wird.

### Vorteile der Erfindung

Der Gegenstand der Erfindung ist in den Ansprüchen definiert. Mit der vorliegenden Erfindung werden ein Verfahren und eine Vorrichtung vorgeschlagen, mit denen sich Multipath-Störungen bei einem Empfänger für elektromagnetische Wellen effektiv unterdrücken lassen, während ein Teil der Antennensignale zumindest zeitweise auch anderweitig genutzt werden kann, beispielsweise um die Möglichkeiten der RDS Aktivitäten besser nutzen zu können. Bei dem erfindungsgemäßen Verfahren wird dies erreicht, indem ein erstes Antennensignal der Erzeugung eines Wiedergabesignals zugrunde gelegt wird, wenn die Signalqualität des ersten Antennensignals oberhalb einer definierten Schwelle für den ungestörten Empfang liegt. In diesem Fall wird die Signalqualität des ersten Antennensignals bestimmt. Das aus mindestens zwei Antennensignalen generierte neue Signal wird der Erzeugung des Wiedergabesignals zugrunde gelegt, wenn die Signalqualität des ersten Antennensignals unter diese Schwelle absinkt. In diesem Fall werden die Signalqualität des generierten neuen Signals und die Signalqualität mindestens eines der Antennensignale bestimmt. Das generierte neue Signal wird solange der Erzeugung des Wiedergabesignals zugrunde gelegt, solange die für das eine Antennensignal bestimmte Signalqualität unterhalb dieser Schwelle liegt und schlechter bewertet wird als die Signalqualität des generierten neuen Signals.

Die erfindungsgemäße Vorrichtung umfasst dazu einen Schalter, über den dem Stereo-Decoder wahlweise ein erstes Antennensignal (Schalterstellung A) oder das Ausgangssignal der Signalgenerierungsmittel (Schalterstellung B) zum Erzeugen eines Wiedergabesignals zugeführt werden kann. Desweiteren kann über diesen Schalter einer ersten Signaldatenerfassungseinheit wahlweise das erste Antennensignal (Schalterstellung A) oder das Ausgangssignal der Signalgenerierungsmittel (Schalterstellung B) zugeführt werden. Die erfindungsgemäße Vorrichtung umfasst außerdem mindestens eine weitere Signaldatenerfassungseinheit für mindestens ein weiteres Antennensignal und eine Monitorschaltung. Dieser Monitorschaltung werden die Ausgänge der ersten Signaldatenerfassungseinheit über einen ersten Kanal und der weiteren Signaldatenerfassungseinheit über einen weiteren Kanal zugeführt werden. Die Monitorschaltung bewertet diese Ausgänge, um den Schalter entsprechend anzusteuern.

Das Auftreten von Multipath-Störungen oder ähnlichen Störungen, beispielsweise verursacht durch Fading-Effekte, ist stark geografisch bedingt. Ob und in welchem Umfang derartige Störungen auftreten, hängt also wesentlich davon ab, wo sich der Empfänger befindet bzw. in welcher Richtung er sich bewegt. Erfindungsgemäß wird nun vorgeschlagen, nur dann Maßnahmen zur Unterdrückung derartiger Störungen zu ergreifen, wenn diese Störungen auch tatsächlich auftreten. Im Fall eines ungestörten Empfangs wird der Erzeugung des Wiedergabesignals daher einfach ein erstes Antennensignal zugrunde gelegt, das auch als Vordergrundsignal bezeichnet wird. Die weiteren dem Empfänger zur Verfügung stehenden Antennensignale, die in diesem Fall als Hintergrundsignale bezeichnet werden, können dann für die Dauer des ungestörten Empfangs ohne zeitliches Limit anderweitig genutzt werden. Der Erzeugung des Wiedergabesignals wird nur dann ein neues aus mehreren Antennensignalen generiertes Signal zugrunde gelegt, wenn das Vordergrundsignal gestört ist. Erfindungsgemäß wird also eine Umschaltmöglichkeit vorgeschlagen, zwischen dem Erzeugen des Wiedergabesignals aus einem ungestörten Vordergrundsignal bei gleichzeitiger anderweitiger Nutzung der Hintergrundsignale und dem Erzeugen des Wiedergabesignals aus einem neuen aus mehreren Antennensignalen generierten Signal.

Grundsätzlich gibt es verschiedene Möglichkeiten für die anderweitige Nutzung der Hintergrundsignale im Rahmen des erfindungsgemäßen Verfahrens. In einer besonders vorteilhaften Ausgestaltung des erfindungsgemäßen Verfahrens wird mindestens eines der Hintergrundsignale kontinuierlich für Radio Data System (RDS) Aktivitäten genutzt, wenn das erste Antennensignal der Erzeugung des Wiedergabesignals zugrunde gelegt wird. In diesem Fall besteht kein zeitliches Limit für die RDS Aktivitäten, wie z.B. AF (alternate frequency) Tests, PI (program identification) Tests und/oder die Beobachtung von TMC (traffic message channel) Kanälen. Da die Hintergrundsignale die Erzeugung des Wiedergabesignals nicht beeinflussen, können nun beispielsweise im Rahmen der AF Tests kontinuierlich alle in Frage kommenden Frequenzen durchgetestet werden.

In einer weiteren vorteilhaften Ausgestaltung des erfindungsgemäßen Verfahrens muss auch dann nicht auf die Nutzung von RDS Aktivitäten verzichtet werden, wenn das generierte neue Signal der Erzeugung des Wiedergabesignals zugrunde gelegt wird, also kein Hintergrundsignal uneingeschränkt für die RDS Aktivitäten zur Verfügung steht. In diesem Fall können nämlich das generierte neue Signal und/oder mindestens eines der weiteren Antennensignale in periodischen Zeitintervallen kurzzeitig und für das menschliche Ohr nicht wahrnehmbar für die RDS Aktivitäten genutzt werden.

Grundsätzlich kann das neue Signal im Rahmen des erfindungsgemäßen Verfahrens auf ganz unterschiedliche Weise aus mindestens zwei Antennensignalen generiert werden.

Zur Bestimmung der Signalqualität erweist es sich als vorteilhaft, verschiedene Signalqualitätsdaten zu ermitteln, insbesondere die Empfangsfeldstärke, Hochpass-Signale, Symmetrie-Signale und die Ergebnisse einer Multipath-Erkennung. Diese Signalqualitätsdaten können dann zur Bewertung der Signalqualität gewichtet werden.

### Zeichnung

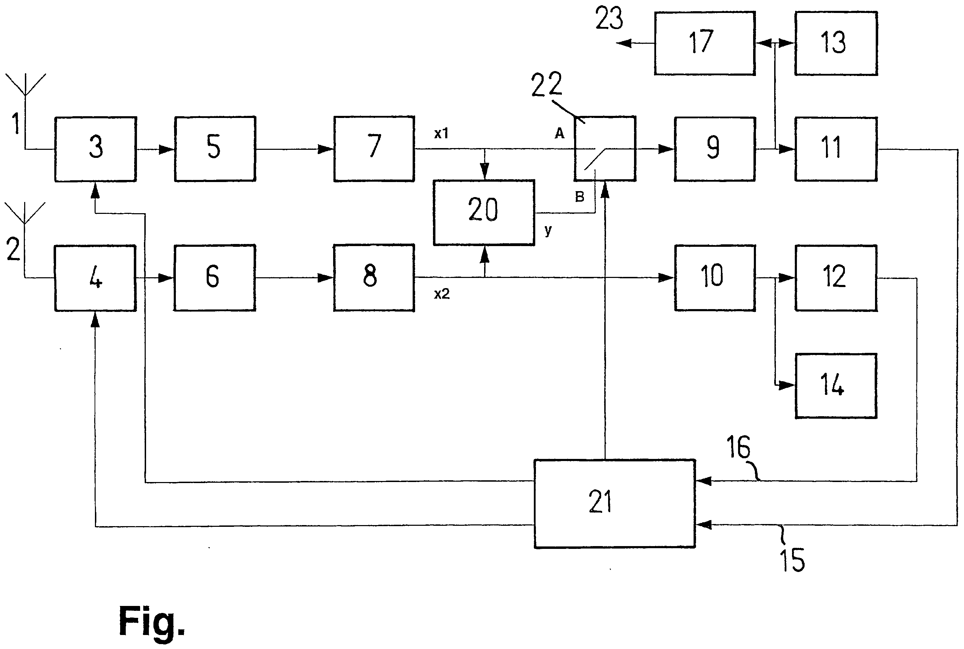

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die den Patentansprüchen 1 und 7 nachgeordneten Patentansprüche und andererseits auf die nachfolgende Beschreibung eines Ausführungsbeispiels der Erfindung anhand der Zeichnung verwiesen.

Die einzige Figur zeigt das Blockschaltbild einer erfindungsgemäßen Vorrichtung zur Realisierung eines erfindungsgemäßen Verfahrens zur Unterdrückung von Multipath-Störungen bei einem FM Empfänger.

### Beschreibung des Ausführungsbeispiels

Bei der in der einzigen Figur dargestellten Variante stehen dem Empfänger zwei Antennensignale 1 und 2 zur Verfügung. Jedes der beiden Antennensignale 1, 2 wird einer HF (Hochfrequenz) Vorstufe 3, 4 zugeführt, wie sie aus dem Stand der Technik bekannt sind. Diese HF Vorstufen 3, 4 liefern jeweils ein analoges ZF (Zwischenfrequenz) Signal als Ausgang, das über einen ZF A/D Wandler 5, 6 einem digitalen ZF Filter 7, 8 zur Unterdrückung von Nachbarkanälen zugeführt wird. Die Ausgangssignale x1 und x2 der beiden ZF Filter 7, 8 werden Signalgenerierungsmitteln 20 zugeführt, die aus diesen beiden Signalen x1 und x2, d.h. aus den beiden vorverarbeiteten Antennensignalen 1, 2, ein neues Signal y generieren.

Das Signal x2 wird außerdem über einen digitalen FM Demodulator 10 einer Signaldatenerfassungseinheit 12 zugeführt. Dort werden zur Bestimmung der Signalqualität des Antennensignals 2 die Empfangsfeldstärke, Hochpasssignale, eine Multipath-Erkennung und Symmetriesignale berechnet. Der Ausgang der Signaldatenerfassungseinheit 12 wird über einen Kanal 16 einer Monitorschaltung 21 zugeführt. Parallel dazu wird das demodulierte Signal x2 auch einem RDS Block 14 zur Demodulation und Decodierung der RDS Daten zugeführt, damit das Antennensignals 2 für RDS Aktivitäten genutzt werden kann.

Das Signal x1 kann - über einen Schalter 22 bei Schalterstellung A - ebenfalls über einen digitalen FM Demodulator 9 einer Signaldatenerfassungseinheit 11 zugeführt werden, deren Ausgang über einen Kanal 15 ebenfalls der Monitorschaltung 21 zugeführt wird. Parallel dazu wird das demodulierte Signal x1 einem Stereodecoder 17 mit automatischer Störunterdrückung zur Erzeugung eines Wiedergabesignals 23 zugeführt und einem RDS Block 13 zur Nutzung des Antennensignals 1 für RDS Aktivitäten.

Bei Schalterstellung B wird dem Stereodecoder 17 anstelle des demodulierten Signals x1 das demodulierte generierte neue Signal y zugeführt, das dann der Erzeugung des Wiedergabesignals 23 zugrunde gelegt wird. Außerdem wird das demodulierte Signal y der Signaldatenerfassungseinheit 11 zugeführt und dem RDS Block 13 zur Nutzung des Signals y für RDS Aktivitäten.

Die Monitorschaltung 21 bewertet die Kanäle 15 und 16 bzw. wertet die von den beiden Signaldatenerfassungseinheiten 11, 12 ermittelten Signaldaten aus und steuert dementsprechend den Schalter 20 an. Außerdem können die beiden HF Vorstufen 3 und 4 über die Monitorschaltung 21 angesteuert werden.

Befindet sich der Schalter 22 in Schalterstellung A, so wird der Erzeugung des Wiedergabesignals 23 im Stereodecoder 17 das erste Antennensignal 1 in vorverarbeiteter Form zugrunde gelegt. In diesem Fall wird mit Hilfe der Signaldatenerfassungseinheit 11 die Signalqualität des vorverarbeiteten ersten Antennensignals x1 bestimmt und der Monitorschaltung 21 über den Kanal 15 zugeführt. Die Monitorschaltung 21 wertet die von der Signaldatenerfassungseinheit 11 ermittelten Signalqualitätsdaten aus. Ist die Signalqualität von Kanal 15 so gut, dass sie nach einer Gewichtung der einzelnen Signalqualitätsdaten oberhalb einer Schwelle für den ungestörten Empfang liegt, dann kann auf das von den Signalgenerierungsmitteln 20 generierte neue Signal y verzichtet werden. In dieser Zeit können das zweite Antennensignal 2 und der zweite Kanal 16 für RDS Aktivitäten genutzt werden.

Verschlechtert sich der Empfang durch Multipath- oder Fading-Effekte, so wird die Signalqualität von Kanal 15 nach Gewichtung der einzelnen Signalqualitätsdaten die Schwelle für den ungestörten Empfang unterschreiten. In diesem Fall steuert die Monitorschaltung 21 den Schalter 22 an, der dann auf Schalterstellung B umschaltet.

Bei Schalterstellung B wird dem Stereodecoder 17 zur Erzeugung des Wiedergabesignals das von den Signalgenerierungsmitteln 20 generierte und vorverarbeitete neue Signal y zugeführt. Mit Hilfe der Signaldatenerfassungseinheit 11 wird nun die Signalqualität des generierten neuen Signals y bestimmt, so dass der Monitorschaltung 21 über den Kanal 15 die Signalqualitätsdaten des Signals y zur Verfügung stehen und über den Kanal 16 die von der Signaldatenerfassungseinheit 12 ermittelten Signalqualitätsdaten des vorverarbeiteten zweiten Antennensignals x2.

Erst wenn die gewichteten Signalqualitätsdaten des Kanals 16, also des vorverarbeiteten zweiten Antennensignals x2, die Schwelle für den ungestörten Empfang wieder überschreiten, wird wieder auf Schalterstellung A umgeschaltet, so dass das zweite Antennensignal 2 wieder ausschließlich für RDS Aktivitäten genutzt werden kann.

Bei Schalterstellung B, also wenn das generierte neue Signal y der Erzeugung des Wiedergabesignals 23 zugrunde gelegt wird, werden sowohl das generierte neue Signal y als auch das zweite Antennensignale 2 bzw. das vorverarbeitete zweite Antennensignal x2 in periodischen Zeitintervallen kurzzeitig und für das menschliche Ohr nicht wahrnehmbar für RDS Aktivitäten genutzt. Hierfür sind die RDS Blöcke 13 und 14 vorgesehen.

## Patentansprüche

1. Verfahren zur Unterdrückung von Multipath-Störungen bei einem Empfänger für elektromagnetische Wellen, insbesondere einem FM- oder UKW-Empfänger, wobei ein erstes Antennensignal (1) einer ersten Antenne und ein zweites Antennensignal (2) einer zweiten Antenne verwendet wird,
wobei
beginnend mit einem ersten Betriebszustand
die Signalqualität des ersten Antennensignals (1) bestimmt wird und
das erste Antennensignal (1) der Erzeugung eines Wiedergabesignals (23) zugrunde gelegt wird, wenn die Signalqualität des ersten Antennensignals (1) oberhalb einer definierten Schwelle für den ungestörten Empfang liegt,
und bei Absinken der Signalqualität des ersten Antennensignals (1) unter diese Schwelle für den ungestörten Empfang in einen zweiten Betriebszustand umgeschaltet wird,
in welchem zweiten Betriebszustand
die Signalqualität eines durch eine Linearkombination aus den beiden vorverarbeiteten Antennensignalen (1, 2) generierten neuen Signals (y) und die Signalqualität eines der zwei Antennensignale (1, 2) bestimmt werden und
das generierte neue Signal (y) solange der Erzeugung des Wiedergabesignals (23) zugrunde gelegt wird, wie die für das eine der zwei Antennensignale (1, 2) bestimmte Signalqualität unterhalb der definierten Schwelle liegt und schlechter bewertet wird als die Signalqualität des generierten neuen Signals (y).

2. Verfahren nach Anspruch 1, **dadurch gekennzeichnet, dass**, wenn das erste Antennensignal (1) der Erzeugung des Wiedergabesignals (23) zugrunde gelegt wird, mindestens eines der weiteren Antennensignale (2) kontinuierlich für Radio Data System (RDS) Aktivitäten, insbesondere für AF (alternate frequency) Tests, für PI (program identification) Tests und/oder für die Beobachtung von TMC (traffic message channel) Kanälen, genutzt wird.

3. Verfahren nach einem der Ansprüche 1 oder 2, **dadurch gekennzeichnet, dass**, wenn das generierte neue Signal y der Erzeugung des Wiedergabesignals (23) zugrunde gelegt wird, das generierte neue Signal y und/oder mindestens eines der weiteren Antennensignale (2) in periodischen Zeitintervallen kurzzeitig und für das menschliche Ohr nicht wahrnehmbar für Radio Data System (RDS) Aktivitäten, insbesondere für AF (alternate frequency) Tests, genutzt wird.

4. Verfahren nach einem der Ansprüche 1 bis 3, **dadurch gekennzeichnet, dass** zur Bestimmung der Signalqualität verschiedene Signalqualitätsdaten ermittelt werden, insbesondere die Empfangsfeldstärke, Hochpass-Signale, Symmetrie-Signale und die Ergebnisse einer Multipath-Erkennung.

5. Verfahren nach Anspruch 4, **dadurch gekennzeichnet, dass** die Signalqualitätsdaten zur Bewertung der Signalqualität gewichtet werden.

## Claims

1. Method for suppressing multipath interference in a receiver for electromagnetic waves, in particular an FM or VHF receiver, wherein a first antenna signal (1) of a first antenna and a second antenna signal (2) of a second antenna are used,
wherein
beginning with a first operating state the signal quality of the first antenna signal (1) is determined and
the first antenna signal (1) is taken as a basis for generating a reproduction signal (23) if the signal quality of the first antenna signal (1) lies above a defined threshold for undisturbed reception,
and in the event of the signal quality of the first antenna signal (1) falling below said threshold for undisturbed reception, a changeover to a second operating state is effected,
in which second operating state
the signal quality of a new signal (y) generated by a linear combination of the two preprocessed antenna signals (1, 2) and the signal quality of one of the two antenna signals (1, 2) are determined and
the new signal (y) generated is taken as a basis for generating the reproduction signal (23) as long as the signal quality determined for said one of the two antenna signals (1, 2) lies below the defined threshold and is rated as poorer than the signal quality of the new signal (y) generated.

2. Method according to Claim 1, **characterized in that**, if the first antenna signal (1) is taken as a basis for generating the reproduction signal (23), at least one of the further antenna signals (2) is utilized continuously for Radio Data System (RDS) activities, in particular for AF (Alternate Frequency) tests, for PI (Program Identification) tests and/or for the observation of TMC (Traffic Message Channel) channels.

3. Method according to either of Claims 1 and 2, **characterized in that** if the new signal y generated is taken as a basis for generating the reproduction signal (23), the new signal y generated and/or at least one of the further antenna signals (2) are/is utilized for Radio Data System (RDS) activities, in particular for AF (Alternate Frequency) tests, at periodic time intervals momentarily and imperceptibly to the human ear.

4. Method according to any of Claims 1 to 3, **characterized in that** various signal quality data are ascertained for determining the signal quality, in particular the received field strength, high-pass filter signals, symmetry signals and the results of a multipath identification.

5. Method according to Claim 4, **characterized in that** the signal quality data are weighted for rating the signal quality.

## Revendications

1. Procédé pour supprimer les brouillages par trajets multiples dans un récepteur d'ondes électromagnétiques, en particulier un récepteur FM ou UKW, dans lequel un premier signal d'antenne (1) d'une première antenne et un second signal d'antenne (2) d'une seconde antenne sont utilisés,
dans lequel, à partir d'un premier état de fonctionnement, la qualité de signal du premier signal d'antenne (1) est déterminée et le premier signal d'antenne (1) est utilisé comme base pour générer un signal de reproduction (23) lorsque la qualité de signal du premier signal d'antenne (1) est supérieure à un seuil défini pour une réception non perturbée,
et lorsque la qualité de signal du premier signal d'antenne (1) s'abaisse en dessous de ce seuil pour la réception non perturbée, un basculement est effectué dans un second état de fonctionnement,
second état de fonctionnement dans lequel la qualité de signal d'un nouveau signal (y) généré par une combinaison linéaire des deux signaux d'antenne prétraités (1, 2) et la qualité de signal de l'un des deux signaux d'antenne (1, 2) sont déterminées, et
le nouveau signal généré (y) est utilisé comme base pour la génération du signal de reproduction (23) tant que la qualité de signal déterminée pour l'un des deux signaux d'antenne (1, 2) est inférieure au seuil défini et est évaluée comme étant inférieure à la qualité de signal du nouveau signal généré (y).

2. Procédé selon la revendication 1, **caractérisé en ce que**, lorsque le premier signal d'antenne (1) est utilisé pour générer le signal de reproduction (23), au moins l'un des autres signaux d'antenne (2) est utilisé en continu pour des activités du Système de Données Radio (RDS), en particulier pour des tests AF (fréquence alternative), pour des tests PI (identification de programme) et/ou pour l'observation de canaux TMC (canal de message de trafic).

3. Procédé selon l'une des revendications 1 ou 2, **caractérisé en ce que**, lorsque le nouveau signal généré (y) est utilisé pour générer le signal de reproduction (23), le nouveau signal généré (y) et/ou au moins l'un des autres signaux d'antenne (2) est/sont utilisé(s) brièvement à des intervalles de temps périodiques et n'est/ne sont pas perceptible(s) par l'oreille humaine pour des activités du Système de Données Radio (RDS), en particulier pour des tests AF (fréquence alternative).

4. Procédé selon l'une des revendications 1 à 3, **caractérisé en ce que** différentes données de qualité de signal sont déterminées pour déterminer la qualité de signal, en particulier l'intensité du champ reçu, des signaux passe-haut, des signaux de symétrie et les résultats d'une détection de trajets multiples.

5. Procédé selon la revendication 4, **caractérisé en ce que** les données de qualité de signal sont pondérées pour évaluer la qualité de signal.
